# FASCICULE DE BREVET EUROPEEN

(11) **EP 3 592 446 B1**
(45) Date de publication et mention de la délivrance du brevet: **16.08.2023**
(21) Numéro de dépôt: 18712958.0
(22) Date de dépôt: 06.03.2018
(51) Int. Cl.: B01D 35/147, B01D 35/153, B01D 35/16, B01D 29/21

(54) **FILTRE ET CARTOUCHE AMOVIBLE INCLUANT UNE VANNE DE DÉRIVATION**
FILTER UND ABNEHMBARE KARTUSCHE MIT BYPASS-VENTIL
FILTER AND REMOVABLE CARTRIDGE INCLUDING A BYPASS VALVE

(30) Priorité: 09.03.2017 FR 1751921
(43) Date de publication de la demande: 15.01.2020
(73) Titulaire: Sogefi Filtration, 78280 Guyancourt (FR)
(72) Inventeur: FAYOLLE, Laurent, 92000 Nanterre (FR)
(74) Mandataire: Plasseraud IP
(86) Numéro de dépôt international: PCT/FR2018/050508
(87) Numéro de publication internationale: WO 2018/162835

(56) Documents cités:
- WO-A1-2015/092523
- FR-A1- 2 845 929

## Description

La présente invention concerne la purification de liquides et en particulier de l'huile utilisée dans les moteurs à combustion interne des véhicules motorisés.

L'invention se rapporte plus particulièrement à un filtre pour la purification d'un liquide de moteur à combustion, en particulier de l'huile de lubrification, comprenant :
- un boîtier de filtre qui présente une entrée pour liquide brut et une sortie pour liquide purifié, le boîtier définissant un volume intérieur et comprenant un couvercle séparable du reste du boîtier, par exemple par dévissage ;
- un insert filtrant, qui s'étend longitudinalement entre une première extrémité distale de la sortie et une deuxième extrémité proximale de la sortie, adapté pour être logé de façon amovible dans le volume intérieur en s'engageant dans une partie de fond du boîtier et comportant :
   - un média filtrant de forme annulaire qui s'étend autour d'un axe central (définissant un axe longitudinal de l'insert filtrant) ;
   - un flasque, situé du côté de la première extrémité pour recouvrir une extrémité axiale du média filtrant ;
- une vanne de dérivation rendue solidaire de l'insert filtrant et interposée, dans le volume intérieur du côté de la première extrémité, entre une zone en amont de la filtration en communication avec l'entrée et une zone en aval de la filtration en communication avec la sortie.

Un filtre de ce genre est décrit dans le document EP 0 800 418. Ce type de filtre présente aussi généralement un canal d'évacuation par drainage (couramment appelé canal de vidange) qui est préférentiellement décentré ou qui entoure la zone de sortie du liquide filtré.

Dans le filtre du document EP 0 800 418, la vanne de dérivation comprend un clapet, un ressort et un siège de clapet. Un tube de support de l'insert filtrant permet de monter le clapet, tandis que le siège de clapet est intégré dans un flasque de l'insert filtrant, ce qui rend la vanne de dérivation indémontable de l'insert filtrant. Un avantage de cette conception est qu'il est permis de réduire l'encombrement entre le flasque supérieur de l'insert filtrant et le couvercle.

Un inconvénient de ce type de filtre est la complexité d'assemblage. Selon une autre option, comme décrit dans le document FR 2 845 929 A1, il est prévu une vanne de dérivation intégrée dans un dispositif de serrage pour maintenir la cartouche filtrante et la solliciter axialement contre des surfaces d'étanchéité, à l'aide d'un ressort interposé entre le couvercle et la vanne de dérivation. L'étanchéité de la vanne de dérivation contre le flasque supérieur est obtenue par un contact annulaire axial. Ce type de contact annulaire axial n'est pas considéré satisfaisant (avec un risque plus élevé de défaut d'étanchéité si le couvercle n'a pas été vissé tout fait jusqu'au bout).

D'autres solutions proposent de monter la vanne de dérivation solidaire du couvercle. Cependant, ce mode d'intégration n'est généralement pas optimal pour l'encombrement en hauteur et peut nécessiter un effort important pour bien fixer l'insert filtrant sous le couvercle, afin d'obtenir à la fois une attache avec le couvercle et une fixation étanche avec la vanne de dérivation.

Le document WO 2015/092523 A1 décrit un mode de fixation qui requiert une structure avec des reliefs spécifiques à la périphérie de la vanne de dérivation et l'utilisation d'un bord libre saillant présentant une conformation ondulée. Ce bord libre doit s'insérer entre une projection intérieure du flasque pourvue d'un joint d'étanchéité et des pattes flexibles de verrouillage (pattes élastiquement déformables référencées « 311 » sur les figures 1-2 de ce document). Le recours à des pattes flexibles sur le flasque supérieur de la cartouche est une source de fragilité (sachant que ces pattes doivent se fléchir aisément pour ne pas rendre l'effort de fixation trop important) et la vanne de dérivation est visiblement non extractible du couvercle. Par ailleurs, les solutions existantes ne permettent pas de flexibilité dans le mode d'intégration de la vanne de dérivation, ce qui empêche par exemple de réutiliser un même modèle de vanne de dérivation, de type préassemblé, pour une large variété de filtres.

Il existe donc un besoin pour une solution alternative d'assemblage d'un insert filtrant dans un boîtier correspondant et qui permet d'obtenir la fonction de dérivation, avec peu de difficulté dans les manipulations pour l'utilisateur,

A cet effet, il est proposé selon l'invention un filtre **tel que défini dans la revendication 1**

Ainsi, l'invention fournit une intégration de la vanne de dérivation qui permet d'utiliser un même modèle de vanne avec des inserts filtrants de structure variée, pour lesquels il suffit que la première extrémité, proche du couvercle, présente par exemple une interface centrale d'adaptation à cette vanne.

**Le déverrouillage de la vanne de dérivation par rapport au reste de la cartouche est particulièrement simple à obtenir, par une rotation d'un angle de 90° ou moins.**

Typiquement, les moyens de solidarisation complémentaires sont formés sur le flasque sur lequel la vanne de dérivation est directement attachée.

Selon un mode de réalisation préféré, l'interface centrale d'adaptation à la vanne inclut le flasque sous la forme d'une seule pièce qui assure la fonction de fixation/montage de la vanne de dérivation, le flasque s'étendant de façon annulaire autour d'un passage central pour recevoir la vanne de dérivation. Préférentiellement, le flasque réalise la fonction de montage de la vanne de dérivation, d'une part en définissant les moyens de solidarisation complémentaires, et d'autre part en présentant ou en supportant un élément d'étanchéité annulaire qui est radialement saillant vers l'intérieur par rapport au reste du flasque. Cet élément d'étanchéité, typiquement déformable, délimite ainsi une section du passage central qui est légèrement inférieure (dans l'état non déformé de l'élément d'étanchéité) à la section définie à la circonférence d'une partie d'insertion de la vanne de dérivation.

Le cas échéant, un tube de support attaché au flasque de fixation peut participer à la fonction de retenue de l'élément d'étanchéité.

Selon une particularité, les moyens de solidarisation complémentaires sont formés sur le flasque sur lequel la vanne de dérivation est directement attachée. De préférence, ces moyens de solidarisation complémentaires présentent des organes d'accrochage pourvus chacun d'au moins une branche radiale située axialement plus loin du média filtrant que l'élément de connexion amovible.

Selon une autre particularité, la vanne de dérivation présente une partie insérable au travers d'un passage central de la première extrémité de l'insert filtrant. Cette disposition permet de limiter l'encombrement en hauteur additionnel de la vanne de dérivation par rapport à l'insert filtrant.

Préférentiellement, la partie insérable présente une surface externe circonférentielle formant une portée cylindrique, en contact radial annulaire étanche avec un élément d'étanchéité qui fait partie de l'insert filtrant.

Selon une particularité, une zone d'étanchéité (de préférence unique) entre le flasque de l'insert filtrant et la vanne de dérivation est définie de façon annulaire, par un contact radial situé axialement plus bas que l'élément de connexion amovible. Avec cette disposition, il est permis de verrouiller et déverrouiller entre eux la vanne de dérivation et l'insert filtrant, sans immédiatement rompre l'étanchéité entre ces deux composants.

Ici, les termes « bas » (côté drainage) et « haut » (côté couvercle) sont clairs, dans la mesure où le filtre est du type fonctionnant avec une purge gravitaire, l'orifice ou canal de drainage de l'huile de lubrification étant bien entendu situé à l'opposé du couvercle.

Selon une particularité, le couvercle présente au moins un organe indéformable de fixation de la cartouche, en prise contre la vanne de dérivation afin de permettre un entraînement en rotation de la cartouche lors d'un dévissage du couvercle.

En outre, la cartouche présente à l'opposé de la partie de fond des reliefs qui s'engagent par exemple axialement sur un dessus de l'organe indéformable, de telle sorte que l'action de dévissage du couvercle entraîne la traction et le désengagement de la cartouche de la partie de fond.

De préférence, le boîtier présente un élément fixe de centrage de la cartouche, formé à l'opposé du flasque et adapté pour pénétrer dans un espace intérieur délimité par une face interne du média filtrant (ceci permet un guidage du mouvement de rotation, en évitant de décentrer la cartouche, en particulier au début du vissage du couvercle).

Selon une particularité, le couvercle présente au moins un organe de fixation de la cartouche permettant une rotation relative du couvercle vis-à-vis de la cartouche lors de chaque vissage et chaque dévissage du couvercle. De préférence, le ou les organes de fixation de ce genre sont élastiquement déformables et définissent un système de clipsage dans une gorge de la cartouche, ce système étant ainsi adapté pour que l'action de dévissage du couvercle entraîne le désengagement de la cartouche de la partie de fond.

Dans divers modes de réalisation du filtre selon l'invention, on peut éventuellement avoir recours en outre à l'une et/ou à l'autre des dispositions suivantes :
- le couvercle est séparable du reste du boîtier par dévissage, le sens du pivotement pour l'action de verrouillage correspondant au sens de dévissage du couvercle.
- le couvercle présente un évidement ou creux interne défini par un organe de prise central en saillie sur le dessus du couvercle, la vanne de dérivation présentant une interface de fixation qui s'étend dans l'évidement, afin de venir en prise avec le couvercle.
- l'élément d'étanchéité est un joint torique s'étendant dans une gorge intérieure de la première extrémité, la gorge intérieure étant au moins en partie définie par le flasque.
- la vanne de dérivation présente une collerette annulaire ayant une face supérieure depuis laquelle font saillies des moyens d'attache au couvercle, par exemple sous la forme de reliefs à forme générale de « L » inversé qui sont répartis autour d'un passage central de la collerette.
- les moyens de solidarisation complémentaires comprennent deux organes d'accrochage formés sur le flasque, en faisant axialement saillie du côté opposé au média filtrant, chacun des deux organes d'accrochage s'engageant au travers d'une fente formée dans une collerette de la vanne de dérivation (le recours à une collerette rend l'extrémité supérieure de la vanne particulièrement robuste et facile à manipuler, tout en permettant de réaliser la fonction de retenue axiale du flasque, typiquement lors du dévissage du couvercle).
- le flasque comporte une portion radiale de forme annulaire.
- la vanne de dérivation comporte :
   - au moins une surface de butée axiale orientée suivant une direction axiale et définie par l'élément de connexion amovible en étant adaptée pour s'engager contre le flasque par le dessous dans la configuration de verrouillage,
   - un clapet mobile,
   - une zone de siège sur laquelle s'engage le clapet dans un état fermé de la vanne de dérivation, cette zone de siège étant orientée axialement en sens opposé à celui de l'orientation de la surface de butée axiale.
- la zone de siège est plus proche de l'axe longitudinal que ne l'est l'élément de connexion amovible.
- la surface de butée axiale, qui permet d'entraîner le flasque lors du dévissage du couvercle, et la zone de siège sont formés par une seule pièce en matière plastique qui définit un conduit de dérivation, le conduit de dérivation débouchant vers le bas dans une configuration de surpression dans laquelle le clapet est poussé à l'encontre d'une force de rappel d'un ressort placé dans le conduit de dérivation (ceci permet à du liquide non filtré de la zone en aval de passer directement dans l'espace intérieur délimité dans le creux du média filtrant).
- les moyens de solidarisation complémentaires s'étendent, parallèlement à l'axe longitudinal, de part et d'autre (à la fois plus haut et plus bas) d'un plan de contact défini par la surface de butée axiale.
- le flasque, préférentiellement réalisé d'une pièce en matière plastique, inclut les moyens de solidarisation complémentaires et constitue un flasque de fixation de la vanne de dérivation.
- le flasque est réalisé en au moins deux pièces ; dans ce cas, l'une des pièces formant le flasque de fixation peut être plus large pour définir la fonction de recouvrement axial du média filtrant, tandis qu'une autre pièce peut être moins large en présentant une surface en contact avec la vanne de dérivation, au moins dans la configuration de verrouillage.
- le boîtier présente un bol présentant un support de montage pourvu d'un conduit central qui fait saillie de façon longitudinale en direction d'une ouverture supérieure du bol.
- une partie de fond du boîtier est agencé dans le bol, l'insert filtrant comprenant à l'opposé du flasque de fixation un flasque de positionnement coopérant avec le support de montage pour emboîter et positionner de façon coaxiale la cartouche sur un conduit central du support de montage.
- le boîtier présente un fond avec un canal de drainage distinct de l'entrée et de la sortie, l'insert filtrant comprenant un flasque de positionnement par rapport auquel font saillie des moyens d'obturation pour obturer de manière étanche une ouverture du canal de drainage (le drainage peut résulter du simple effet de la gravité lorsque la cartouche est désengagée).
- le couvercle, qui forme une partie de fermeture du boîtier permettant d'obturer l'ouverture supérieure du bol, est adapté pour être vissé sur le bol, en présentant de préférence une partie insérable (dans le bol) pourvue d'un filetage externe.
- le couvercle présente un organe de fixation de la cartouche, cet organe de fixation comprenant une portion d'entraînement en rotation de la cartouche au moins lors d'un dévissage du couvercle sur lequel est fixée la cartouche.
- le flasque de positionnement est monobloc en matière plastique et inclut des moyens d'obturation qui s'étendent autour du conduit central, ce conduit central définissant la sortie ou un passage axial en communication avec la sortie.
- le conduit central s'étend pour partie dans un espace intérieur délimité par une face interne du média filtrant.

Par ailleurs, l'invention a également pour objet une cartouche selon la revendication 13, ladite cartouche cumulant les fonctions de filtration de liquide afin de séparer les impuretés (notamment solides) dans un liquide de lubrification et de dérivation en cas de surpression, adaptée pour coopérer dans un filtre selon l'invention sachant que cette cartouche amovible est définie par l'insert filtrant qui est jetable et par la vanne de dérivation qui est réutilisable.

Typiquement, une telle cartouche, montée de façon amovible dans le boîtier de filtre, est pourvue d'un élément d'obturation qui est formé dans l'insert filtrant et fait saillie axialement à l'opposé de la vanne de dérivation afin d'obturer un canal de drainage du filtre.

Dans divers modes de réalisation de la cartouche selon l'invention, on peut éventuellement avoir recours en outre à l'une et/ou à l'autre des dispositions suivantes :
- l'insert filtrant présente un flasque de fixation à la vanne de dérivation, selon une connexion de type baïonnette, la vanne de dérivation présentant :
   - une partie insérable au travers d'un orifice central du flasque de fixation,
   - une partie externe complémentaire de la partie insérable et qui inclut l'élément de connexion amovible,
- à l'état inséré, la partie insérable est disposée de telle façon que le clapet s'engage sur une zone de siège dans un espace intérieur délimité par une face interne du média filtrant,
- la connexion de type baïonnette est réalisée entre l'élément de connexion amovible et les moyens de solidarisation complémentaires,
- l'élément de connexion amovible s'étend sensiblement dans un plan perpendiculaire à l'axe longitudinal de l'insert filtrant,
- l'élément de connexion amovible est adapté pour venir en prise avec des organes d'accrochage du flasque, à distance d'une portion radiale du flasque de fixation permettant de recouvrir une extrémité axiale du média filtrant.
- l'insert filtrant comprend en outre un flasque de positionnement supportant deux joints d'étanchéité annulaires répartis de part et d'autre d'un relief annulaire, saillant vers le bas, formé dans le flasque de positionnement, sachant que le relief annulaire et les deux joints définissent l'élément d'obturation.
- les deux joints annulaires sont reçus chacun dans une gorge circonférentielle respective du relief annulaire.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue éclatée d'un filtre conforme à l'invention, illustrant la cartouche du filtre et le boîtier associé qui présente un support de montage et un couvercle ;
- la figure 2 est une vue en perspective montrant une première extrémité de la cartouche de la figure 1, du côté du flasque supérieur de l'insert filtrant ;
- la figure 3 est une vue en coupe longitudinale montrant le montage de la cartouche dans la partie de fond du boîtier et un exemple d'engagement entre la cartouche et le couvercle du boîtier, selon le même mode de réalisation que la figure 1 ;
- la figure 4 est une vue éclatée permettant de montrer le dessous du flasque supérieur représenté sur la figure 2, à l'issue d'un démontage de la cartouche par rapport au couvercle du boîtier ;
- la figure 5 illustre un exemple de flasque de fixation prévu à l'extrémité supérieure de l'insert filtrant ;
- la figure 6 est une vue en coupe longitudinale illustrant une variante de réalisation pour solidariser la cartouche au couvercle.

Sur les différentes figures, les mêmes références désignent des éléments identiques ou similaires.

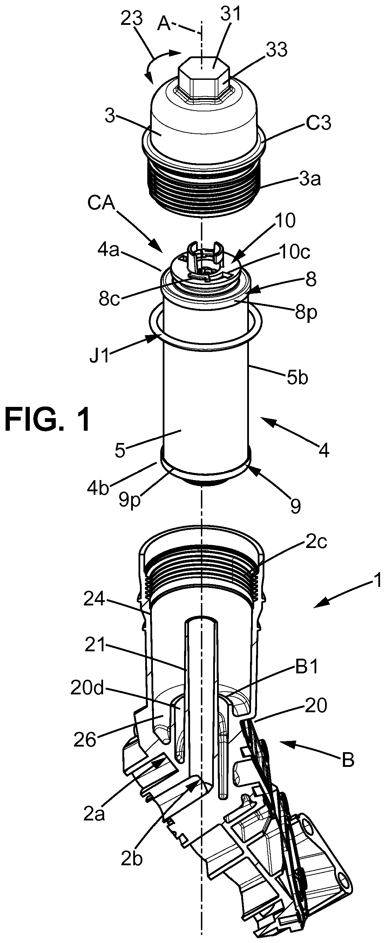

En référence à la figure 1, le filtre à liquide 1 comporte un boîtier 2 qui comprend un bol B avec une partie de fond 20 et un couvercle 3 se fixant de manière détachable sur le bol B, par exemple par vissage. La forme générale de bol B permet de délimiter, avec le couvercle 3, un volume intérieur V du boîtier 2. La partie de fond 20 peut inclure un support de montage destiné à rester solidaire du moteur, dans un véhicule automobile. Plus généralement, on préfère que la partie de fond 20 ou le bol B dans son ensemble constitue une partie fixe du boîtier 2, tandis que le couvercle 3 est séparable à l'aide d'une fixation amovible définie en périphérie du volume intérieur V. Le couvercle 3 est préférentiellement en matière plastique, tandis que la partie de fond 20 peut se composer, en totalité ou pour l'essentiel, d'un matériau métallique, par exemple de l'aluminium ou un alliage d'aluminium. Le bol B dans son ensemble peut être métallique.

Le couvercle 3 présente par exemple une zone filetée 3a formée sur la face externe d'une portion tubulaire du couvercle 3. Cette zone filetée 3a coopère typiquement avec une zone filetée 2c complémentaire prévue sur une paroi latérale 24 du bol B, ici sur une face interne de la paroi latérale 24. Un joint annulaire J1 peut être ajouté et placé en butée axiale contre une collerette C3, ici formée sur le couvercle 3 dans l'exemple non limitatif de la figure 1. La partie supérieure du couvercle 3 peut présenter un ou plusieurs organes saillants. Ici, il est prévu un relief de manoeuvre 31 facilitant la prise par un outil de démontage.

Comme représenté sur la figure 1, afin de faciliter le vissage ou le dévissage du couvercle 3, par rotation selon l'un ou l'autre des sens de la double flèche 23 autour de l'axe longitudinal de l'insert filtrant 4, la face externe du couvercle 3 présente préférentiellement un relief de manoeuvre 31 qui est formé d'une seule pièce avec le couvercle 3. Le relief de manoeuvre 31 peut être constitué par un bossage faisant saillie vers l'extérieur sensiblement parallèlement à l'axe central A.

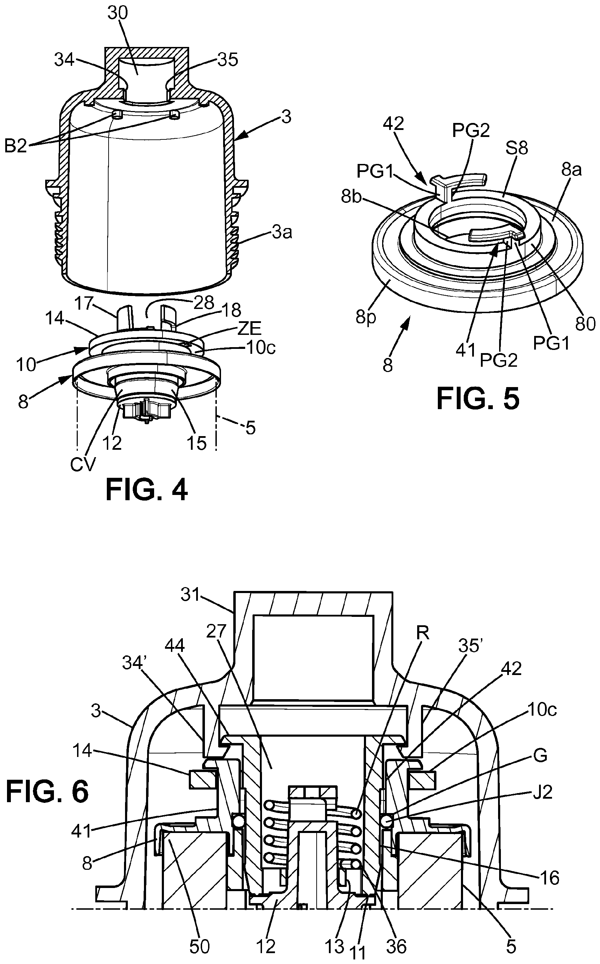

En référence aux figures 1 et 4, ce bossage peut former un sous-volume 30 du volume intérieur V et présente une surface extérieure 33 ou surface active, ici de forme hexagonale. Cette surface extérieure 33 est adaptée pour s'emboîter à l'intérieur de la tête creuse d'une clé de manoeuvre (non représentée) telle qu'une clé à pipe ou similaire.

Le filtre 1 comporte un insert filtrant 4 jetable, capable de filtrer un liquide de lubrification (huile de moteur à combustion thermique par exemple). Comme cela est visible sur la figure 1, l'insert filtrant 4 comporte une première extrémité 4a, ici supérieure, pourvue d'un premier flasque ou flasque 8 de fixation permettant le montage d'une vanne de dérivation 10, et une deuxième extrémité 4b, ici inférieure, pourvue d'un deuxième flasque appelé dans ce qui suit flasque de positionnement 9. Un média filtrant 5 de forme annulaire s'étend entre ces deux flasques 8, 9 autour de l'axe central A et permet de filtrer le liquide, typiquement une huile de lubrification. Chacun des flasques 8, 9 peut être réalisé en une matière plastique.

L'insert filtrant 4 supporte une vanne de dérivation 10 et permet, avec une telle vanne de dérivation 10, de délimiter une zone Z1 en amont de la filtration en communication avec l'entrée 2a pour du liquide brut et une zone Z2 en aval de la filtration en communication avec la sortie 2b de liquide filtré. Sur la figure 1, on peut voir que l'entrée 2a et la sortie 2b sont formées de préférence à l'opposé du couvercle 3, dans la partie de fond 20.

En référence à la figure 1, l'ensemble formé par l'insert filtrant 4 et la vanne de dérivation 10 définit une cartouche amovible CA, adaptée pour être montée dans et extraite du volume intérieur V du boîtier 2. La vanne de dérivation 10 et l'insert filtrant 4 définissent une cartouche amovible CA. La vanne de dérivation 10 forme une unité préassemblée. La fixation de cette dernière à la première extrémité 4a de l'insert filtrant 4 permet de former une partie de dessus de la cartouche amovible CA.

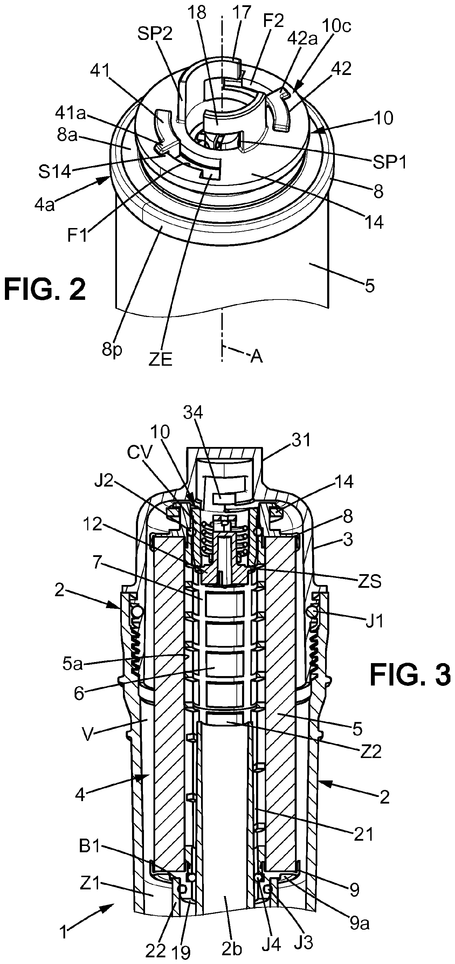

Du côté de la deuxième extrémité 4b, le flasque de positionnement 9 forme tout ou partie du dessous de la cartouche amovible CA. Dans ce flasque de positionnement 9, comme bien visible sur la figure 3, il est préférentiellement prévu un élément d'obturation 19, axialement saillant vers le bas (du côté opposé au flasque de fixation 8) par rapport à une portion radiale 9a du flasque de positionnement 9 qui recouvre une extrémité axiale inférieure du média filtrant 5.

On comprend que le flasque de positionnement 9 permet à la cartouche amovible CA d'être engagée dans la partie de fond 20, d'une façon centrée. Un canal 20d de drainage du liquide de lubrification, formé dans la partie de fond 20 du bol B, peut ainsi être bouché de façon étanche par l'élément d'obturation 19.

Le canal de drainage 20d formé dans la partie de fond 20 est par exemple séparé de l'entrée 2a et de la sortie 2b. Il peut s'étendre de façon annulaire autour et le long d'une extrémité inférieure d'un conduit central 21 prévu pour permettre l'évacuation du liquide filtré vers la sortie 2b du filtre 1. Une portion de conduit 22 entoure le conduit central 21 avec un espace préférentiellement constant pour définir le canal de drainage 20d. La portion de conduit 22 et la paroi latérale 24 du bol B délimitent entre eux une gorge 26 dans laquelle débouche l'entrée 2a.

Cette configuration n'est pas limitative et, par exemple, le canal de drainage 20d peut alternativement être conçu de façon non concentrique par rapport à l'axe d'extension du conduit central 21.

Dans l'exemple non limitatif illustré sur la figure 3, l'élément d'obturation 19 consiste en une portion tubulaire axiale raccordée à la portion radiale 9a annulaire du flasque 9. L'élément d'obturation 19 est pourvu d'au moins un joint d'étanchéité annulaire J3 permettant de définir une zone circonférentielle d'étanchéité radialement saillante par rapport à une face interne de la portion de conduit 22. De préférence, l'élément d'obturation 19 définit ou supporte en outre un élément d'étanchéité, ici un joint annulaire J4, afin de définir une zone circonférentielle d'étanchéité en contact radial contre le conduit central 21. Le joint annulaire J4 forme ici une pièce additionnelle telle que le reste du flasque de positionnement 9 est radialement espacé du conduit central 21.

Comme bien visible sur la figure 1, l'insert filtrant 4 présente un axe longitudinal qui peut correspondre à l'axe central A autour duquel s'étend le média filtrant 5. Typiquement, une portion radiale 8a du flasque de fixation 8 recouvre tout ou partie d'une extrémité axiale 50 du média filtrant 5. Cette portion radiale 8a présente ainsi une première face d'un premier côté où est disposé le média filtrant 5 et une deuxième face d'un deuxième côté opposé au premier côté suivant la direction de l'axe A. Le flasque de fixation 8 présente ici des moyens de solidarisation 8c qui sont formés axialement en saillie sur la deuxième face du flasque de fixation 8, afin de permettre une connexion amovible avec un élément de connexion 10c de la vanne de dérivation 10.

L'axe longitudinal A coïncide également avec le conduit central 21, préférentiellement cylindrique, qui est formé dans la partie de fond 20 en faisant saillie vers le couvercle 3. Des parties annulaires périphériques respectives 8p, 9p des flasques 8, 9, qui prolongent axialement les portions radiales 8a, 9a, sont optionnellement prévues afin de recouvrir les extrémités de la face latérale externe 5b du média filtrant 5.

Pendant le fonctionnement du filtre 1, Le liquide à filtrer arrive par l'entrée 2a et peut circuler le long d'une paroi latérale du boîtier 2, avant de traverser de façon centripète le média filtrant 5. Dans l'espace intérieur 6, le liquide filtré est évacué par le conduit central 21 qui forme par exemple l'unique accès à la sortie 2b à l'état monté de la cartouche CA.

En référence à la figure 3, la face interne 5a du média filtrant 5 délimite un espace intérieur 6 dans lequel s'étend un tube de support 7 appartenant à l'insert filtrant 4. L'espace intérieur 6 communique de manière étanche avec l'une parmi l'entrée 2a et la sortie 2b (de préférence la sortie 2b) par un passage formé à travers le flasque de positionnement 9 lorsque ce dernier coopère avec la partie de fond 20.

Le tube de support 7 est de préférence un tube creux en plastique ayant une structure de type grille et qui sert à supporter la face interne 5a (ici définie par du matériau filtrant du média filtrant 5), afin d'empêcher toute déformation excessive du média filtrant 5 sous la pression de liquide traversant de façon centripète le matériau filtrant. Les ouvertures dans le tube de support 7 permettent une pénétration de liquide sans restriction à l'intérieur de ce tube 7. Le tube de support 7 peut être notamment vissé ou clipsé, directement sur le flasque de positionnement 9, par exemple dans une zone de fixation située dans l'espace intérieur 6, au-dessus d'une zone d'étanchéité radiale entre l'insert filtrant 4 et le conduit central 21. Le tube de support 7 peut aussi être vissé, clipsé, ou rendu solidaire d'une autre façon au flasque de fixation 8.

Dans un mode de réalisation préféré de la cartouche CA, la vanne de dérivation 10 est solidarisée en rotation au couvercle 3 au moins pendant l'opération de dévissage de ce couvercle 3. La solidarisation au couvercle 3 peut être réalisée de façon directe par des reliefs 17, 18 en saillie formés sur une collerette 14 ou autre portion définissant une face supérieure de la vanne de dérivation 10. Les reliefs 17, 18, ici au nombre de deux, sont répartis et espacés l'un de l'autre sur le dessus de la collerette 14, sans obturer ni interférer avec l'ouverture axiale d'un conduit de dérivation 27 défini par la vanne de dérivation 10.

En référence aux figures 4 et 5, ces reliefs 17, 18 peuvent être formés d'une pièce, en matière plastique, avec le corps externe CV de la vanne de dérivation 10 qui permet de définir le conduit de dérivation 27. Deux passages axiaux 28 sont alors définis dans les intervalles formés entre ces deux reliefs 17, 18. Chacun de ces reliefs peut présenter une forme générale de « L » inversé.

La figure 4 illustre une option de fixation dans laquelle les reliefs 17, 18 de la vanne de dérivation 10 font saillie axialement pour pénétrer dans le sous-volume 30 formé dans le creux d'un bossage du couvercle 3. Les ergots de fixation 34, 35 définis par le couvercle 3, qui font saillie radialement vers l'intérieur, (ici dans la zone de débouché du sous-volume 30) peuvent traverser les passages 28 et être ensuite positionnés sous les parties supérieures élargies des reliefs 17, 18. Ces ergots de fixation 34, 35 s'engagent ainsi dans l'interface de connexion de type baïonnette formée par les reliefs 17, 18. Les ergots 34, 35 forment ici des organes indéformables (car suffisamment rigides) de fixation de la cartouche CA, en prise contre la vanne de dérivation 10.

La forme coudée de chacun des reliefs 17, 18 permet de définir un bord inférieur dans la partie qui fait saillie sur le côté. En référence à la figure 3, pour la position montée de la cartouche CA, on comprend que le bord inférieur formé dans le relief 17 ou 18 est en prise avec la face supérieure de l'ergot correspondant 34 ou 35.

Des portions de gorge sont définies dans le sous-volume 30, juste au-dessus de ces ergots 34, 35. L'engagement par pivotement relatif entre les reliefs 17, 18 et les ergots 34, 35 permet aux parties qui font saillie sur un côté de s'engager dans ces portions de gorges. Avec cette prise en butée de façon axiale, la remontée des ergots 34, 35 en cas de dévissage du couvercle 3 provoque une poussée axiale ascendante qui entraîne les reliefs 17, 18 de la vanne de dérivation 10.

Comme la vanne de dérivation 10 est engagée dans l'insert filtrant 4, la cartouche CA forme un bloc. En effet, la vanne de dérivation 10 est par exemple rendue solidaire de l'insert filtrant 4 au travers d'une ouverture 8b, ici une ouverture centrale unique, du flasque de fixation 8. Par conséquent, les reliefs 17, 18, à l'état engagé avec le couvercle 3 ont une fonction de traction de toute la cartouche CA au moment du dévissage du couvercle 3, afin que la remontée du couvercle 3 soit convertie en un désengagement puis un retrait du flasque de positionnement 9 loin de la portion de fond 20. Il est donc permis d'extraire la cartouche CA hors du bol B, avec le couvercle 3.

Il est permis ici de rapprocher la collerette 14 d'un fond du couvercle 3 pour un gain en compacité, parce que les reliefs 17, 18 sont reçu dans le sous-volume 30. La structure des reliefs 17, 18 permet d'obtenir un mode de fixation compact et amovible, grâce auquel la vanne de dérivation 10 peut être solidaire en rotation du couvercle 3 d'une part (au moins lors d'un mouvement de dévissage du couvercle 3), tout en permettant à cette vanne de dérivation 10 d'être aisément démontée du couvercle 3, par un pivotement qui ne dépasse pas généralement 90°.

Du côté du flasque de fixation 8, la vanne de dérivation 10 peut être montée de façon à obturer de façon étanche l'ouverture 8b. Pour cela, la vanne de dérivation 10 présente ici une partie insérable 15 qui est engagée axialement au travers d'un passage central du flasque 8 défini par l'ouverture 8b. Cette partie insérable 15 présente une surface externe circonférentielle formant une portée cylindrique 16 (bien visible sur la figure 6). Cette portée cylindrique 16 est en contact radial annulaire étanche avec un élément d'étanchéité J2, ici un joint torique, qui appartient à l'insert filtrant 4.

Un tel élément d'étanchéité J2 peut être retenu par un montage dans une rainure circonférentielle interne ou une gorge intérieure G de la première extrémité 4a de l'insert filtrant 4. Cette gorge intérieure G est par exemple définie au moins en partie par le flasque 8, dans l'espace intérieur 6 ou à un niveau de hauteur proche de celui de l'extrémité axiale 50 supérieure du média filtrant 5. Dans une variante de réalisation, l'élément d'étanchéité J2 peut être défini intégralement avec une pièce moulée en plastique qui forme tout ou partie du flasque de fixation 8, par exemple en étant formé par un bourrelet saillant vers l'intérieur ou une lèvre d'étanchéité.

En référence aux figures 3 et 6, on peut voir que la vanne de dérivation 10 présente une zone de siège ZS qui s'étend dans l'espace intérieur 6. La vanne de dérivation 10 présente un clapet 12 mobile axialement et apte à permettre une communication entre la zone en amont Z1 et la zone en aval Z2, lorsque la diminution de pression à travers le média filtrant 5 surpasse un seuil.

Bien que les dessins montrent le cas d'une vanne de dérivation 10 préassemblée attachée au flasque 8 de l'insert filtrant 4 en reposant sur une surface axiale S8 (figure 5) de celui-ci, d'autre modes de solidarisation sont possibles, par exemple en engageant au moins une partie de la vanne de dérivation 10 au tube de support 7.

Un exemple de réalisation de la vanne de dérivation 10 va être à présent décrit plus en détail, en référence aux figures 2 et 3.

La vanne de dérivation 10 présente un corps externe CV, ici formé d'une seule pièce en matière plastique ou autre matière rigide, qui inclut :
- un élément tubulaire 11 s'étendant longitudinalement autour d'un axe central qui peut typiquement coïncider avec l'axe longitudinal A dans un état monté de la vanne de dérivation 10 sur la première extrémité 4a de l'insert filtrant 4, l'élément tubulaire 11 formant une partie d'insertion qui s'étend dans l'espace intérieur 6, du côté d'une extrémité inférieure ;
- un organe de butée 13 adapté pour un engagement en appui axial de l'extrémité fixe 36 (par exemple une extrémité inférieure) d'un ressort R de la vanne de dérivation 10,
- une collerette 14 raccordée à une extrémité supérieure de l'élément tubulaire 11.

La vanne de dérivation 10 comprend également le ressort R, ici de forme hélicoïdale au moins dans une partie intermédiaire, et le clapet 12 dont l'extrémité inférieure est préférentiellement élargie pour permettre d'obturer le bas du conduit de dérivation 27 formé par l'élément tubulaire 11. La zone de siège ZS pour recevoir axialement le clapet 12 est par exemple définie par le bord libre inférieur de l'élément tubulaire 11.

L'organe de butée 13 s'étend en travers d'un passage axial formé intérieurement dans l'élément tubulaire 11 et peut inclure plusieurs entretoises espacées entre elles. Le ressort R présente une extrémité mobile solidaire d'une partie d'attache du clapet 12, prévue du côté d'une extrémité supérieure du clapet 12.

La configuration d'obturation est la configuration par défaut et une surpression est nécessaire du côté de la zone en amont Z1 pour que le clapet 12 soit poussé de façon descendante, en direction de la partie de fond 20.

En référence à la figure 2, on peut voir que le corps externe CV peut optionnellement définir une interface de fixation utilisée à la fois pour la fixation au couvercle 3 et pour la réception et le verrouillage en position d'un ou plusieurs organes d'accrochage 41, 42 de l'insert filtrant 4.

Outre les reliefs 17, 18, ici prévus à proximité du bord d'une ouverture supérieure définie par l'élément tubulaire 11, la vanne de dérivation 10 peut présenter au moins un élément de connexion 10c dans son extrémité supérieure, qui définit par exemple des fentes F1, F2 ou des encoches adaptées pour :
- permettre le passage d'au moins deux organes d'accrochage 41, 42 qui font saillie axialement depuis une projection annulaire 80 formée dans le flasque de fixation 8, et
- permettre un pivotement du flasque de fixation 8 après ce passage, alors que l'élément de connexion 10c formé à l'extrémité supérieure de la vanne de dérivation 10 repose axialement sur la projection 80.

En particulier, la vanne de dérivation 10 est rendue ici solidaire du flasque de fixation 8 à l'aide d'une connexion de type baïonnette ou connexion amovible similaire dans laquelle le mouvement de rotation relatif entre le flasque 8 et l'élément de connexion 10c permet de verrouiller une configuration de fixation.

La collerette 14 de forme annulaire permet, dans cet exemple non limitatif, de former au moins deux fentes F1, F2 courbées et définissant chacune une portion de trajectoire circulaire. En outre chacune, des fentes F1, F2 peut présenter une largeur sensiblement constante, sauf dans une zone d'élargissement ZE qui peut se situer du côté d'une extrémité d'introduction de la fente considérée F1 ou F2. A l'opposé de l'extrémité d'introduction, il n'y a pas d'élargissement et la fente F1, F2 présente un bord de prise adapté pour s'engager dans une portion de gorge PG2 des organes d'accrochage 41, 42.

En référence aux figures 2 et 5, la présence d'une zone d'élargissement ZE dans chacune des fentes F1, F2 permet de définir deux directions d'élargissement (non parallèles entre elles) dans les organes d'accrochage 41, 42 qui sont ici des éléments de connexion baïonnette. De cette façon, il existe deux portions de gorge PG1 et PG2 définies par chaque organe d'accrochage 41, 42, avec une orientation différente (par exemple une orientation à 90° entre elles comme bien visible sur la figure 5).

Les organes d'accrochage 41, 42 font ici saillie axialement vers le haut depuis la projection 80 qui est préférentiellement annulaire et continue. On peut voir sur la figure 5 que les organes d'ancrage sont raccordés à la projection 80 par une portion étroite (pas plus large que la largeur des fentes F1, F2) à laquelle se raccorde deux branches radiales. L'une de ces deux branches s'étend suivant une première direction d'élargissement circonférentielle, par exemple parallèlement à la projection annulaire 80 en étant optionnellement allongée. On définit ainsi une forme coudée, permettant de définir la portion de gorge PG2 sous la branche allongée. L'autre 41a, 42a de ces deux branches peut faire saillie radialement vers l'extérieur par rapport à la portion étroite et la portion de gorge PG1 est définie sous cette branche (qui est ici plus courte que la branche allongée, sans que cet exemple soit limitatif).

L'élément de connexion amovible 10c comporte une surface de butée axiale S14 qui peut s'engager contre le flasque 8, ici par le dessous de chacune des branches des organes d'accrochage 41, 42.

Dans une option, au moins une surface de came peut être prévue sur l'un parmi le flasque 8 et l'élément de connexion 10c, dans la ou les zones d'engagement. Par exemple, un effet de came est obtenu afin de finaliser le verrouillage, en augmentant le serrage axial entre le flasque 8 et l'élément de connexion 10c de la vanne de dérivation 10. Une surface de came peut ainsi être prévue sur la face inférieure des branches allongées, avec un maximum de surépaisseur dans la zone adjacente à la portion de gorge PG2.

En complément ou en variante, on peut prévoir un système de finalisation de verrouillage avec un effet de clipsage et/ou un quelconque engagement d'un relief de retenue par déformation élastique des organes d'accrochage 41, 42. Plus généralement, on comprend qu'il est préférable de rendre le déverrouillage de la fixation entre le flasque 8 et l'élément de connexion 10c, ici obtenu par un premier système à connexion baïonnette (8c, 10c), plus difficile que le déverrouillage des reliefs 17, 18 utilisés dans le deuxième système à connexion baïonnette. L'effet de retenue provoqué par le contact d'étanchéité (avec typiquement la présence du joint J2) et l'interaction entre les pièces participent à rendre le premier système (8c, 10c) plus difficile à déverrouiller.

Bien que les moyens de solidarisation 8c prévus sur le flasque 8 sont ici décrits sous la forme de deux organes d'accrochage 41, 42 insérables au travers des fentes F1, F2, on comprend que d'autres options de fixation sont possibles, par exemple en formant des fentes ou des rainures latérales sur le flasque 8 et en introduisant dans ces fentes des parties saillantes formées dans l'extrémité supérieure de la vanne de dérivation 10.

Dans une variante réalisation de la cartouche CA, le flasque de fixation 8 peut être fixé directement au couvercle 3 et solidarisé en rotation à celui-ci au moins pendant l'opération de dévissage. La solidarisation au couvercle 3 peut être réalisée par des reliefs en saillie formés par le flasque de fixation 8, de tels reliefs pouvant traverser une interface ou élément de connexion amovible 10c prévu sur la vanne de dérivation 10.

En référence à la figure 6, on peut voir que la cartouche CA peut être optionnellement fixée au couvercle 3 sans nécessairement tourner avec celui-ci lors d'opérations de vissage et dévissage.

Ici, la cartouche CA est grosso modo identique à celle montrée sur les figures 1 à 3, hormis le mode de fixation au couvercle 3 permis par la vanne de dérivation 10. Le couvercle 3 présente au moins un organe de fixation 34', 35' qui est élastiquement déformable, afin de pouvoir s'engager dans une gorge, par exemple sous une collerette additionnelle 44 formée au-dessus de la collerette 14. Une telle collerette additionnelle 44 peut optionnellement être réalisée par une pièce rapportée ou surmoulée sur le corps externe CV de la vanne de dérivation 10. On peut prévoir au moins deux ou au moins trois pattes de fixation à effet de clisage, intégralement moulées avec le reste du couvercle 3, pour définir les organes de fixation 34', 35'.

Bien entendu, la zone de retenue des organes de fixation 34', 35' peut être adaptée en fonction des besoins. Par exemple, on peut définir une gorge ou des portions de gorge de retenue dans l'extrémité supérieure 4a de l'insert filtrant 4, en particulier lorsque cette extrémité supérieure 4a s'étend axialement plus haut que le premier système de connexion baïonnette (8, 10c).

Cette option de la figure 6 permet aussi de désengager la cartouche CA de la partie de fond 20 puis de déconnecter la cartouche CA du couvercle 3. Ici, contrairement à la solution avec un deuxième système à connexion baïonnette, l'action de dévissage du couvercle 3 ne fait pas tourner la cartouche CA dès lors que les organes de fixation 34', 35' peuvent librement tourner contre la gorge ou les portions de gorge de retenue.

Un exemple d'opération de démontage va être à présent décrit en référence aux figures 1 à 4, lorsqu'il est prévu deux systèmes de connexion à baïonnette.

Comme montré sur la figure 3, lorsque la cartouche CA est en position enfoncée dans le volume intérieur V, le canal de drainage 20d permettant l'évacuation de liquide est bouché par l'élément d'obturation 19 et le flasque de positionnement 9 est engagé axialement sur la butée B1 définie ici par le bord libre de la portion de conduit 22. Bien que la butée B1 soit illustrée sur la figure 1 comme formant une surface plane continue, on peut en variante prévoir une butée B1 formée par des surfaces discontinues.

Des picots ou autres reliefs saillants axialement vers l'intérieur, formés dans le couvercle 3, peuvent exercer une fonction de centrage, et optionnellement définir des butées B2 opposées à la butée B1, afin de réaliser un maintien de la position enfoncée de la cartouche CA. Les picots peuvent être agencés pour guider et/ou venir s'appuyer sur l'extrémité supérieure de la vanne de dérivation 10, ici sur une face supérieure de la collerette 14 et dans une zone périphérique qui est préférentiellement décalée radialement vers l'extérieur par rapport aux fentes F1, F2. Bien entendu, une surface continue du couvercle 3 peut aussi définir un élément d'indexation unique ou une butée B2 unique, dans une variante de réalisation.

Lors du dévissage du couvercle 3 auquel est fixée la cartouche CA, les pattes d'accrochage 34, 35 exercent une action d'entraînement par appui sur des surfaces de poussée SP1. De telles surfaces de poussée SP1 sont définies par les reliefs 17, 18 appartenant à la vanne de dérivation 10. Ici, on peut voir que le sens du pivotement pour l'action de verrouillage correspond au sens de dévissage du couvercle 3.

En référence aux figures 1 et 2, on peut voir que la vanne de dérivation 10 constitue un composant intermédiaire pour l'entraînement en rotation de l'insert filtrant 4 par le couvercle 3. Lors du dévissage, les surfaces de poussée SP1 sont sollicitées et la collerette 14 entraîne à son tour en rotation les organes d'accrochage 41, 42. Lors du dévissage, on comprend que chacun des deux systèmes de connexion à baïonnette est dans un état verrouillé empêchant la désolidarisation axiale.

Au fur et à mesure de la remontée du couvercle 3 le long du filetage 2c, le flasque de positionnement 9 remonte puis se désengage du canal de drainage 20d. En effet, la hauteur de la zone de filetage entre le couvercle 3 et le bol B est typiquement plus grande que l'extension axiale de l'élément d'obturation 19.

Comme l'ouverture du canal de drainage 20d nécessite un effort de remontée important, la retenue axiale entre les composants 4, 10 de la cartouche CA doit être robuste, tout comme la retenue au couvercle 3. Lors du vissage en revanche, il n'est pas nécessaire d'avoir un tel niveau de robustesse dans la retenue. C'est pourquoi, le vissage peut être réalisé de façon satisfaisante, même en entraînant les reliefs 17, 18 par la ou les surfaces de poussée SP2, dans une configuration qui ne garantit pas autant le maintien axial entre les composants deux à deux, notamment entre le couvercle 3 et la vanne de dérivation 10. Ceci n'est pas gênant car les conditions du vissage d'un couvercle 3 sur un bol B qui est fixe par rapport au moteur ne sont pas susceptibles de générer un espacement axial entre les composants.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Filtre (1) pour la purification d'un liquide de moteur à combustion, en particulier de l'huile de lubrification, comprenant :
- un boîtier (2) qui présente une entrée (2a) pour du liquide brut et une sortie (2b) pour du liquide purifié, le boîtier (2) définissant un volume intérieur (V) et comprenant un couvercle (3) séparable du reste du boîtier, l'entrée (2a) et la sortie (2b) étant formées à l'opposé du couvercle (3), dans une partie de fond (20) du boîtier (2) ;
- un insert filtrant (4), qui s'étend longitudinalement entre une première extrémité (4a) distale de la sortie et une deuxième extrémité (4b) proximale de la sortie, adapté pour être logé de façon amovible dans le volume intérieur (V) en s'engageant dans la partie de fond (20) et comprenant :
- un média filtrant (5) de forme annulaire qui s'étend autour d'un axe central (A) définissant un axe longitudinal de l'insert filtrant (4) ;
- un flasque (8), situé du côté de la première extrémité (4a) pour recouvrir une extrémité axiale (50) du média filtrant (5) ;
- une vanne de dérivation (10) formant une unité préassemblée et rendue solidaire de l'insert filtrant (4), la vanne de dérivation étant interposée, dans le volume intérieur du côté de la première extrémité, entre une zone (Z1) en amont de la filtration en communication avec l'entrée (2a) et une zone (Z2) en aval de la filtration en communication avec la sortie (2b), la vanne de dérivation (10) étant solidarisée au couvercle (3) par un système de connexion ;
**caractérisé en ce que** la vanne de dérivation (10) :
- est séparable du couvercle (3) de façon à ce que l'ensemble formé par l'insert filtrant (4) et la vanne de dérivation (10) définisse une cartouche amovible (CA),
- forme une unité préassemblée, et
présente au moins un élément (10c) de connexion amovible qui :
- dans une configuration de verrouillage, est axialement en prise avec des moyens de solidarisation (8c) complémentaires formés sur la première extrémité (4a) de l'insert filtrant (4), les moyens de solidarisation complémentaires étant formés sur le flasque (8) sur lequel la vanne de dérivation (10) est directement attachée, et
- permet un démontage ultérieur de la vanne de dérivation (10) par rapport à l'insert filtrant (4) ;
et **en ce que** la vanne de dérivation (10) et la première extrémité (4a) de l'insert filtrant (4) sont en relation bloquée l'une par rapport à l'autre par une connexion de type baïonnette dans la configuration de verrouillage, la vanne de dérivation étant ainsi adaptée pour être solidarisée sur la première extrémité (4a), par une action de verrouillage qui s'effectue par un pivotement autour de l'axe central (A) de l'un par rapport à l'autre entre la vanne de dérivation (10) et l'insert filtrant (4),
ledit élément (10c) de connexion amovible étant formé, dans une configuration de verrouillage, plus haut et ainsi plus éloigné de la partie de fond (20) qu'une zone d'étanchéité définie par le contact radial annulaire d'un élément d'étanchéité entre le flasque (8) et la vanne de dérivation (10), en étant axialement en prise avec lesdits moyens de solidarisation (8c) complémentaires.

2. Filtre selon la revendication 1, dans lequel le couvercle (3) est séparable du reste du boîtier par dévissage, le sens du pivotement pour ladite action de verrouillage correspondant au sens de dévissage du couvercle (3).

3. Filtre selon la revendication 2, dans lequel le couvercle (3) présente au moins un organe indéformable (34, 35) de fixation de la cartouche (CA), en prise contre la vanne de dérivation (10) afin de permettre un entraînement en rotation de la cartouche (CA) lors d'un dévissage du couvercle (3), la cartouche (CA) présentant à l'opposé de la partie de fond (20) des reliefs (17, 18) s'engageant axialement sur un dessus de l'organe indéformable, de telle sorte que l'action de dévissage du couvercle (3) entraîne le désengagement de la cartouche (CA) de la partie de fond (20).

4. Filtre selon la revendication 2, dans lequel le couvercle (3) présente au moins un organe de fixation (34', 35') de la cartouche (CA) permettant une rotation relative du couvercle (3) vis-à-vis de la cartouche (CA) lors de chaque vissage et chaque dévissage du couvercle (3),
et dans lequel ledit au moins un organe de fixation (34', 35') est élastiquement déformable et définit un système de clipsage dans une gorge de la cartouche, adapté pour que l'action de dévissage du couvercle (3) entraîne le désengagement de la cartouche (CA) de la partie de fond (20).

5. Filtre selon l'une quelconque des revendications précédentes, dans lequel les moyens de solidarisation (8c) complémentaires :
- sont formés sur le flasque (8) sur lequel la vanne de dérivation (10) est directement attachée, et
- présentent des organes d'accrochage (41, 42) pourvus chacun d'au moins une branche radiale (41a, 42a) située axialement plus loin du média filtrant (5) que ledit élément de connexion amovible (10c).

6. Filtre selon l'une quelconque des revendications précédentes, dans lequel la vanne de dérivation (10) présente une partie insérable (15) au travers d'un passage central du flasque (8),
et dans lequel :
- il est formé ladite zone d'étanchéité résultant d'un contact radial annulaire d'un élément d'étanchéité (J2) entre le flasque (8) de l'insert filtrant (4) et la partie insérable (15) de la vanne de dérivation (10); et/ou
- la partie insérable (15) présente une surface externe circonférentielle formant une portée cylindrique (16), en contact radial annulaire étanche avec ledit élément d'étanchéité (J2) qui fait partie de l'insert filtrant (4).

7. Filtre selon la revendication 6, dans lequel l'élément d'étanchéité (J2) est un joint torique s'étendant dans une gorge intérieure (G) de la première extrémité (4a), la gorge intérieure (G) étant au moins en partie définie par le flasque (8).

8. Filtre selon l'une quelconque des revendications précédentes, dans lequel les moyens de solidarisation complémentaires (8c) comprennent deux organes d'accrochage (41, 42) formés sur le flasque (8), en faisant saillie du côté opposé au média filtrant (5), et dans lequel la vanne de dérivation comprend une collerette (14) dans laquelle sont formées au moins deux fentes (F1 ,F2), chacun des deux organes d'accrochage (41,42) s'engageant au travers d'une des au moins deux fentes (F1 ,F2).

9. Filtre selon la revendication 8, dans lequel la collerette (14) est formée autour d'un conduit de dérivation (27) appartenant à la vanne de dérivation (10), la collerette (14) définissant une face supérieure de la vanne de dérivation (10),
et dans lequel les deux fentes (F1, F2), pour l'insertion respective des deux organes d'accrochage (41, 42) sont courbées et définissent chacune une portion de trajectoire circulaire en occupant une position qui est :
- décalée radialement vers l'intérieur par rapport à une zone périphérique de la collerette (14), et
- décalée radialement vers l'extérieur par rapport à une ouverture axiale du conduit de dérivation (27).

10. Filtre selon l'une quelconque des revendications précédentes, dans lequel le flasque (8) comporte une portion radiale (8a) de forme annulaire,
et dans lequel la vanne de dérivation (10) comporte :
- au moins une surface de butée axiale (S14) définie par l'élément de connexion amovible (10c) et adaptée pour s'engager contre le flasque (8) par le dessous dans ladite configuration de verrouillage,
- un clapet (12) mobile, et
- une zone de siège (ZS) sur laquelle s'engage le clapet (12) dans un état fermé de la vanne de dérivation (10), la zone de siège étant orientée axialement à l'opposé de ladite surface de butée axiale (S14).

11. Filtre selon l'une quelconque des revendications précédentes, dans lequel le flasque (8) inclut les moyens de solidarisation complémentaires (8c) et constitue un flasque de fixation de la vanne de dérivation (10),
et dans lequel le boîtier (2) présente :
- un bol (B) dans lequel est agencé la partie de fond (20) du boîtier (2) et présentant un support de montage, l'insert filtrant (4) présentant à l'opposé du flasque de fixation (8) un flasque de positionnement (9) coopérant avec ledit support de montage pour emboîter et positionner coaxialement la cartouche (CA) sur un conduit central (21) du support de montage ; et
- ledit couvercle (3) qui est adapté pour être vissé sur le bol (B) et qui présente au moins un organe de fixation (34, 35) de la cartouche (CA), ledit organe de fixation (34, 35) comprenant une portion d'entraînement en rotation de la cartouche (CA) au moins lors d'un dévissage du couvercle (3) sur lequel est fixé la cartouche (CA).

12. Filtre selon la revendication 11, dans lequel le flasque de positionnement (9) est monobloc en matière plastique et inclut des moyens d'obturation (19) qui s'étendent autour du conduit central (21) qui définit la sortie ou est en communication avec la sortie (2b).

13. Cartouche amovible (CA) du filtre défini dans l'une quelconque des revendications 1 à 12, destinée à la séparation d'impuretés dans un liquide de lubrification, ladite cartouche comprenant un insert filtrant (4) et une vanne de dérivation (10),
sachant que ledit insert filtrant (4), qui s'étend longitudinalement entre une première extrémité (4a) distale de la sortie et une deuxième extrémité (4b) proximale de la sortie, comprend :
- un média filtrant (5) de forme annulaire qui s'étend autour d'un axe central (A) définissant un axe longitudinal de l'insert filtrant (4) ;
- un flasque (8), situé du côté de la première extrémité (4a) pour recouvrir une extrémité axiale (50) du média filtrant (5) ;
la vanne de dérivation (10) formant une unité préassemblée et rendue solidaire de l'insert filtrant (4), la vanne de dérivation étant ainsi adaptée pour être solidarisée sur la première extrémité (4a), par une action de verrouillage qui s'effectue par un pivotement autour de l'axe central (A) de l'un par rapport à l'autre entre la vanne de dérivation (10) et l'insert filtrant (4),
la cartouche étant pourvue d'un élément d'obturation (19) qui est formé dans l'insert filtrant (4) et axialement saillant à l'opposé de la vanne de dérivation (10), le média filtrant (5) de l'insert filtrant (4) ayant une extrémité axiale inférieure recouverte par une portion radiale (9a) d'un flasque inférieur (9) appartenant à l'insert filtrant (4), l'élément d'obturation (19) étant axialement saillant vers le bas par rapport à la portion radiale (9a) du flasque inférieur (9) et pourvu d'au moins un élément d'étanchéité (J3) annulaire afin d'obturer un canal de drainage (20d) du filtre (1),
sachant que la cartouche amovible (CA) est définie par l'assemblage dudit insert filtrant (4) qui est jetable et de ladite vanne de dérivation (10) qui est réutilisable,
la vanne de dérivation (10) et la première extrémité (4a) de l'insert filtrant (4) étant en relation bloquée l'une par rapport à l'autre par une connexion de type baïonnette dans la configuration de verrouillage,
la vanne de dérivation (10) présentant au moins un élément (10c) de connexion amovible qui :
- dans une configuration de verrouillage, est formé plus haut qu'une zone d'étanchéité définie par le contact radial annulaire d'un élément d'étanchéité entre le flasque (8) de l'insert filtrant (4) et la vanne de dérivation (10), en étant axialement en prise avec des moyens de solidarisation (8c) complémentaires formés sur la première extrémité (4a) de l'insert filtrant (4), les moyens de solidarisation (8c) complémentaires étant formés sur le flasque (8) sur lequel la vanne de dérivation (10) est directement attachée, et
- permet un démontage ultérieur de la vanne de dérivation (10) par rapport à l'insert filtrant (4).

14. Cartouche amovible selon la revendication 13, dans lequel l'insert filtrant (4) présente un flasque (8) de fixation à la vanne de dérivation (10), la connexion de type baïonnette étant réalisée entre ledit élément de connexion amovible (10c) appartenant à la vanne de dérivation et les moyens de solidarisation (8c) complémentaires qui appartiennent à l'insert filtrant, la vanne de dérivation (10) présentant :
- une partie insérable (15) au travers d'un orifice central du flasque (8) de fixation, permettant au clapet (12) de s'engager sur une zone de siège (ZS) dans un espace intérieur (6) délimité par une face interne du média filtrant (5),
- ledit élément (10c) de connexion amovible qui appartient à une partie externe complémentaire de la partie insérable (15), et qui s'étend sensiblement dans un plan perpendiculaire à l'axe central (A).

15. Cartouche amovible selon la revendication 14, dans lequel l'insert filtrant (4) comprend en outre un flasque (9) de positionnement supportant deux joints d'étanchéité annulaires (J3, J4) répartis de part et d'autre d'un relief annulaire, saillant vers le bas, formé dans le flasque de positionnement (9), sachant que le relief annulaire et les deux joints définissent l'élément d'obturation (19).

## Patentansprüche

1. Filter (1) für die Reinigung einer Verbrennungsmotorflüssigkeit, insbesondere von Schmieröl, aufweisend:
- ein Gehäuse (2), das einen Eingang (2a) für Rohflüssigkeit und einen Ausgang (2b) für gereinigte Flüssigkeit hat, wobei das Gehäuse (2) ein Innenvolumen (V) definiert und einen vom Rest des Gehäuses separierbaren Deckel (3) aufweist, wobei der Eingang (2a) und der Ausgang (2b) auf der zum Deckel (3) entgegengesetzten Seite in einem Bodenteil (20) des Gehäuses (2) gebildet sind;
- einen Filtereinsatz (4), der sich in Längsrichtung zwischen einem bezüglich des Ausgangs distalen ersten Ende (4a) und einem bezüglich des Ausgangs proximalen zweiten Ende (4b) erstreckt, angepasst ist, durch Einrücken in den Bodenteil (20) auf abnehmbare Weise in dem Innenvolumen (V) aufgenommen zu werden, und aufweist:
- ein ringförmiges Filtermedium (5), das sich um eine zentrale Achse (A) erstreckt, die eine Längsachse des Filtereinsatzes (4) definiert,
- einen Flansch (8), der sich auf der Seite des ersten Endes (4a) befindet, um ein axiales Ende (50) des Filtermediums (5) zu bedecken;
- ein Bypass-Ventil (10), das eine vormontierte Einheit bildet und fest mit dem Filtereinsatz (4) verbunden ist, wobei das Bypass-Ventil in dem Innenvolumen auf der Seite des ersten Endes zwischen einer stromauf der Filtration gelegenen Zone (Z1) in Kommunikation mit dem Eingang (2a) und einer stromab der Filtration gelegenen Zone (Z2) in Kommunikation mit dem Ausgang (2b) angeordnet ist, wobei das Bypass-Ventil (10) über ein Verbindungssystem mit dem Deckel (3) verbunden ist;
**dadurch gekennzeichnet, dass** das Bypass-Ventil (10):
- von dem Deckel (3) separierbar ist, derart, dass die von dem Filtereinsatz (4) und dem Bypass-Ventil (10) gebildete Anordnung eine abnehmbare Kartusche (CA) bildet,
- eine vormontierte Einheit bildet, und
mindestens ein Verbindungselement (10c) für lösbare Verbindung aufweist, das:
- in einer Verriegelungskonfiguration axial im Eingriff mit komplementären Verbindungseinrichtungen (8c) ist, die an dem ersten Ende (4a) des Filtereinsatzes (4) gebildet sind, wobei die komplementären Verbindungseinrichtungen an dem Flansch (8) gebildet sind, an dem das Bypass-Ventil (10) direkt angebracht ist, und
- ein späteres Abmontieren des Bypass-Ventils (10) bezüglich des Filtereinsatzes (4) erlaubt;
und dadurch, dass in der Verriegelungskonfiguration das Bypass-Ventil (10) und das erste Ende (4a) des Filtereinsatzes (4) durch eine Verbindung des Bajonett-Typs in einer zueinander blockierten Beziehung sind, wobei das Bypass-Ventil also angepasst ist, durch einen Verriegelungsvorgang, der durch eine relative Drehung zwischen dem Bypass-Ventil (10) und dem Filtereinsatz (4) um die zentrale Achse (A) erfolgt, an dem ersten Ende (4a) angebracht zu werden,
wobei in einer Verriegelungskonfiguration das Verbindungselement (10c) für lösbare Verbindung höher und somit von dem Bodenteil (20) weiter entfernt gebildet ist als eine von dem radialen ringförmigen Kontakt eines Dichtungselements zwischen dem Flansch (8) und dem Bypass-Ventil (10) definierte Dichtungszone und dabei axial im Eingriff mit den komplementären Verbindungseinrichtungen (8c) ist.

2. Filter nach Anspruch 1, in welchem der Deckel (3) durch Abschrauben vom Rest des Gehäuses separierbar ist, wobei die Drehrichtung für den Verriegelungsvorgang der Abschraubrichtung des Deckels (3) entspricht.

3. Filter nach Anspruch 2, in welchem der Deckel (3) mindestens ein nichtverformbares Element (34, 35) zum Befestigen der Kartusche (CA) aufweist, das an dem Bypass-Ventil (CA) im Eingriff ist, um eine drehende Mitnahme der Kartusche (CA) beim Abschrauben des Deckels (3) zu erlauben, wobei die Kartusche (CA) auf der zum Bodenteil (20) entgegengesetzten Seite Vorsprünge (17, 18) aufweist, die axial an eine Oberseite des nichtverformbaren Elements greifen, derart, dass das Abschrauben des Deckels (3) das Ausrücken der Kartusche (CA) von dem Bodenteil (20) zur Folge hat.

4. Filter nach Anspruch 2, in welchem der Deckel (3) mindestens ein Befestigungselement (34', 35') zum Befestigen der Kartusche (CA) aufweist, das bei jedem Zuschrauben und jedem Abschrauben des Deckels (3) eine relative Drehung des Deckels (3) bezüglich der Kartusche (CA) erlaubt,
und in welchem das mindestens eine Befestigungselement (34', 35') elastisch verformbar ist und ein System zum Einschnappen in eine Auskehlung der Kartusche definiert, das so angepasst ist, dass das Abschrauben des Deckels (3) ein Ausrücken der Kartusche (CA) von dem Bodenteil (20) zur Folge hat.

5. Filter nach einem der vorstehenden Ansprüche, in welchem die komplementären Verbindungseinrichtungen (8c):
- an dem Flansch (8) gebildet sind, an dem das Bypass-Ventil (10) direkt angebracht ist, und
- Hakenelemente (41, 42) aufweisen, die jeweils mit mindestens einem radialen Arm (41a, 42a) versehen sind, der axial weiter weg von dem Filtermedium (5) angeordnet ist als das Verbindungselement (10c) für lösbare Verbindung.

6. Filter nach einem der vorstehenden Ansprüche, in welchem das Bypass-Ventil (10) einen durch einen zentralen Durchlass des Flansches (8) einsetzbaren Teil (15) aufweist,
und in welchem:
- die Dichtungszone als Resultat eines ringförmigen radialen Kontakts eines Dichtungselements (J2) zwischen dem Flansch (8) des Filtereinsatzes (4) und dem einsetzbaren Teil (15) des Bypass-Ventils (10) gebildet ist; und/oder
- der einsetzbare Teil (15) eine Außenumfangsfläche aufweist, die eine zylindrische Auflage (16) in radialem ringförmigem dichtem Kontakt mit dem Dichtungselement (J2) bildet, das Teil des Filtereinsatzes (4) ist.

7. Filter nach Anspruch 6, in welchem das Dichtungselement (J2) eine O-Ring-Dichtung ist, die sich in einer inneren Auskehlung (G) des ersten Endes (4a) erstreckt, wobei die innere Auskehlung (G) mindestens teilweise von dem Flansch (8) definiert ist.

8. Filter nach einem der vorstehenden Ansprüche, in welchem die komplementären Verbindungseinrichtungen (8c) zwei an dem Flansch (8) gebildete Hakenelemente (41, 42) aufweisen, die an der dem Filtermedium (5) abgewandten Seite vorspringen, und in welchem das Bypass-Ventil einen Kragen (14) aufweist, in dem mindestens zwei Schlitze (F 1, F2) gebildet sind, wobei jedes der zwei Hakenelemente (41, 42) durch einen der mindestens zwei Schlitze (F1, F2) greift.

9. Filter nach Anspruch 8, in welchem der Kragen (14) um eine dem Bypass-Ventil (10) zugehörige Bypass-Leitung (27) herum gebildet ist, wobei der Kragen (14) eine obere Oberfläche des Bypass-Ventils (10) definiert,
und in welchem die zwei Schlitze (F1, F2), die für das jeweilige Einsetzen der zwei Hakenelemente (41, 42) sind, bogenförmig sind und jeweils einen Kreisbahnabschnitt definieren und eine Position einnehmen, die
- bezüglich einer Randzone des Kragens (14) radial nach innen versetzt ist, und
- bezüglich einer axialen Öffnung der Bypass-Leitung (27) radial nach außen versetzt ist.

10. Filter nach einem der vorstehenden Ansprüche, in welchem der Flansch (8) einen ringförmigen radialen Abschnitt (8a) aufweist,
und in welchem das Bypass-Ventil (10) aufweist:
- mindestens eine axiale Anschlagfläche (S14), die von dem Verbindungselement (10c) für lösbare Verbindung definiert ist und angepasst ist, in der Verriegelungskonfiguration mit der Unterseite den Flansch (8) zu greifen,
- eine bewegliche Klappe (12), und
- eine Sitzzone (ZS), an der die Klappe (12) in einem geschlossenen Zustand des Bypass-Ventils (10) im Eingriff ist, wobei die Sitzzone axial an der Gegenseite der axialen Anschlagfläche (S14) orientiert ist.

11. Filter nach einem der vorstehenden Ansprüche, in welchem der Flansch (8) komplementäre Verbindungseinrichtungen (8c) aufweist und einen Befestigungsflansch zum Befestigen des Bypass-Ventils (10) bildet,
und in welchem das Gehäuse (2) aufweist:
- eine Schale (B), in der der Bodenteil (20) des Gehäuses (2) angeordnet ist und die eine Montagehalterung aufweist, wobei der Filtereinsatz (4) auf der zum Befestigungsflansch (8) entgegengesetzten Seite einen Positionierungsflansch (9) aufweist, der mit der Montagehalterung zusammenwirkt, um die Kartusche (CA) an einer zentralen Leitung (21) der Montagehalterung koaxial einzupassen und zu positionieren; und
- den Deckel (3), der angepasst ist, auf die Schale (B) geschraubt zu werden, und der mindestens ein Befestigungselement (34, 35) zum Befestigen der Kartusche (CA) aufweist, wobei das Befestigungselement (34, 35) einen Drehmitnahmeteil aufweist, um zumindest bei einem Abschrauben des Deckels (3), an dem die Kartusche (CA) befestigt ist, die Kartusche (CA) drehend mitzunehmen.

12. Filter nach Anspruch 11, in welchem der Positionierungsflansch (9) einteilig aus einem Kunststoffmaterial ist und Verschlusseinrichtungen (19) aufweist, die sich um die zentrale Leitung (21) herum erstrecken, die den Ausgang definiert oder in Kommunikation mit dem Ausgang (2b) ist.

13. Abnehmbare Kartusche (CA) des in einem der Ansprüche 1 bis 12 definierten Filters, die zum Separieren von Verunreinigungen aus einer Schmierflüssigkeit vorgesehen ist, wobei die Kartusche einen Filtereinsatz (4) und ein Bypass-Ventil (10) aufweist,
wobei der Filtereinsatz (4), der sich in Längsrichtung zwischen einem ersten Ende (4a), das distal bezüglich des Ausgangs ist, und einem zweiten Ende (4b), das proximal bezüglich des Ausgangs ist, erstreckt, aufweist:
- ein ringförmiges Filtermedium (5), das sich um eine zentrale Achse (A) erstreckt, die eine Längsachse des Filtereinsatzes (4) definiert,
- einen Flansch (8), der sich auf der Seite des ersten Endes (4a) befindet, um ein axiales Ende (50) des Filtermediums (5) zu bedecken;
wobei das Bypass-Ventil (10) eine vormontierte Einheit bildet und fest mit dem Filtereinsatz (4) verbunden ist, das Bypass-Ventil derart angepasst ist, um durch einen Verriegelungsvorgang, der durch eine relative Drehung zwischen dem Bypass-Ventil (10) und dem Filtereinsatz (4) um die zentrale Achse (A) erfolgt, an dem ersten Ende (4a) angebracht zu werden,
die Kartusche an der zum Bypass-Ventil (10) entgegengesetzten Seite mit einem Verschlusselement (19) versehen ist, das in dem Filtereinsatz (4) gebildet ist und axial vorspringt, wobei das Filtermedium (5) des Filtereinsatzes (4) ein unteres axiales Ende hat, das von einem radialen Abschnitt (9a) eines unteren Flansches (9), der zu dem Filtereinsatz (4) gehört, bedeckt ist, das Verschlusselement (19) bezüglich des radialen Abschnitts (9a) des unteren Flansches (9) axial nach unten vorspringt und mit mindestens einem ringförmigen Dichtungselement (J3) versehen ist, um einen Ablaufkanal (20d) des Filters (1) zu verschließen,
wobei die abnehmbare Kartusche (CA) durch das Zusammenfügen des Filtereinsatzes (4), der wegwerfbar ist, und des Bypass-Ventils (10), das wiederverwendbar ist, definiert ist,
wobei in der Verriegelungskonfiguration das Bypass-Ventil (10) und das erste Ende (4a) des Filtereinsatzes (4) durch eine Verbindung des Baj onett-Typs in einer zueinander blockierten Beziehung sind,
wobei das Bypass-Ventil (10) mindestens ein Verbindungselement (10c) für lösbare Verbindung aufweist, das
- in einer Verriegelungskonfiguration höher als eine von dem radialen ringförmigen Kontakt eines Dichtungselements zwischen dem Flansch (8) des Filtereinsatzes (4) und dem Bypass-Ventil (10) definierte Dichtungszone gebildet ist und dabei axial im Eingriff mit den komplementären Verbindungseinrichtungen (8c) ist, die an dem ersten Ende (4a) des Filtereinsatzes (4) gebildet sind, wobei die komplementären Verbindungseinrichtungen (8c) an dem Flansch (8) gebildet sind, an dem das Bypass-Ventil (10) direkt angebracht ist, und
- ein späteres Abmontieren des Bypass-Ventils (10) bezüglich des Filtereinsatzes (4) erlaubt.

14. Abnehmbare Kartusche nach Anspruch 13, in welcher der Filtereinsatz (4) einen Befestigungsflansch (8) zum Befestigen des Bypass-Ventils (10) aufweist, wobei die BajonettVerbindung zwischen dem Verbindungselement (10c) für lösbare Verbindung, das zu dem Bypass-Ventil gehört, und den komplementären Verbindungseinrichtungen (8c), die zu dem Filtereinsatz gehören, verwirklicht ist, wobei das Bypass-Ventil (10) aufweist:
- einen durch eine zentrale Öffnung des Befestigungsflansches (8) einsetzbaren Teil (15), der der Klappe (12) erlaubt, auf einer Sitzzone (ZS) in einem von einer Innenfläche des Filtermediums (5) begrenzten Innenraum (6) aufzuliegen,
- das Verbindungselement (10c) für lösbare Verbindung, das zu einem äußeren komplementären Teil des einsetzbaren Teils (15) gehört und das sich im Wesentlichen in einer zur zentralen Achse (A) senkrechten Ebene erstreckt.

15. Abnehmbare Kartusche nach Anspruch 14, in welcher der Filtereinsatz (4) ferner einen Positionierungsflansch (9) aufweist, der zwei ringförmige Dichtungen (J3, J4) trägt, die beiderseits eines nach unten vorspringenden, in dem Positionierungsflansch (9) gebildeten ringförmigen Vorsprungs verteilt sind, wobei der ringförmige Vorsprung und die zwei Dichtungen das Verschlusselement (19) definieren.

## Claims

1. Filter (1) for purifying a liquid for an internal combustion engine, in particular lubricating oil, comprising:
- a housing (2) having an inlet (2a) for unprocessed liquid and an outlet (2b) for purified liquid, the housing (2) defining an interior volume (V) and comprising a cover (3) that can be detached from the rest of the housing, the inlet (2a) and the outlet (2b) being formed a the opposite from the cover (3), in a bottom portion (20) of the housing (2);
- a filter insert (4), which extends longitudinally between a distal first end (4a) of the outlet and a proximal second end (4b) of the outlet, adapted to be removably received within the interior volume (V) by engaging in the bottom portion (20) and comprising:
- a filter medium (5) of annular shape which extends around a central axis (A) defining a longitudinal axis of the filter insert (4);
- a flange (8), located towards the first end (4a), for covering one axial end (50) of the filter medium (5);
- a bypass valve (10) forming a preassembled unit and secured to the filter insert (4), the bypass valve being interposed, within the interior volume towards the first end, between a region (Z1) upstream of the filtration that is in communication with the inlet (2a) and a region (Z2) downstream of the filtration that is in communication with the outlet (2b); the bypass valve (10) being integrally secured to the cover (3) by a connection system;
**characterized in that** the bypass valve (10):
- is detachable from the cover (3) so that the assembly formed by the filter insert (4) and the bypass valve (10) defines a removable cartridge (CA),
- forms a preassembled unit, and
has at least one removable connection member (10c) which:
- in a locking configuration, is axially engaged with complementary securing means (8c) formed on the first end (4a) of the filter insert (4), the complementary securing means being formed on the flange (8) to which the bypass valve (10) is directly attached, and
- allows subsequent disassembly of the bypass valve (10) from the filter insert (4);
**and in that** the bypass valve (10) is adapted to be integrally secured on the first end (4a), by a locking action which is carried out by pivoting the bypass valve (10) and the filter insert (4) relative to one another about the central axis (A),
said removable connection member (10c) being formed, in a locking configuration, higher and thus more distant from the bottom portion (20) than a sealing region defined by the annular radial contact of a sealing member between the flange (8) and the bypass valve (10), being axially engaged with the complementary securing means (8c).

2. Filter according to claim 1, wherein the cover (3) is detachable from the rest of the housing by unscrewing, the pivoting direction for said locking action corresponding to the unscrewing direction of the cover (3).

3. Filter according to claim 2, wherein the cover (3) has at least one non-deformable member (34, 35) for attaching the cartridge (CA), engaged against the bypass valve (10) so as to allow driving the cartridge (CA) in rotation when unscrewing the cover (3), the cartridge (CA) having, opposite to the bottom portion (20), protrusions (17, 18) which engage axially with a top of the non-deformable member, such that the action of unscrewing the cover (3) causes the cartridge (CA) to disengage from the bottom portion (20).

4. Filter according to claim 2, wherein the cover (3) has at least one attachment member (34', 35') for the cartridge (CA) allowing relative rotation between the cover (3) and the cartridge (CA) during every screwing and unscrewing of the cover (3),
and wherein said at least one attachment member (34', 35') is elastically deformable and defines a system for clipping into a groove of the cartridge, adapted so that the action of unscrewing the cover (3) causes the cartridge (CA) to disengage from the bottom portion (20).

5. Filter according to any one of the preceding claims, wherein the complementary securing means (8c):
- are formed on the flange (8) to which the bypass valve (10) is directly attached, and
- have coupling members (41, 42) each provided with at least one radial arm (41a, 42a) located further away axially from the filter medium (5) than said removable connection member (10c).

6. Filter according to any one of the preceding claims, wherein the bypass valve (10) has a portion (15) that is insertable through a central passage of the flange (8),
and wherein:
- the sealing region is formed, resulting from an annular radial contact of a sealing member (J2) between the flange (8) of the filter insert (4) and the insertable portion (15) of the bypass valve (10); and/or
- the insertable portion (15) has a circumferential outer surface forming a cylindrical bearing surface (16), in sealing annular radial contact with said sealing member (J2) that is part of the filter insert (4).

7. Filter according to claim 6, wherein the sealing member (J2) is an O-ring extending in an inner groove (G) of the first end (4a), the inner groove (G) being at least partly defined by the flange (8).

8. Filter according to any one of the preceding claims, wherein the complementary securing means (8c) comprise two coupling members (41, 42) formed on the flange (8), projecting from the side opposite to the filter medium (5),
and wherein the bypass valve comprises a collar (14) in which at least two slots (F1, F2) are formed, each of two coupling members (41, 42) being insertable through one of the at least two slots (F1, F2).

9. Filter according to claim 8, wherein the collar (14) is formed around a bypass duct (27) that belongs to the bypass valve (10), the collar (4) defining an upper face of the bypass valve (10),
and wherein the two slots (F1, F2) for respective insertion of the two coupling members 41, 42 are curved and each define a portion of a circular path, by occupying a position, which is:
- offset radially inward relative to a peripheral area of the collar (4c), and
- offset radially outward relative to an axial opening of the bypass duct (27).

10. Filter according to claim 8 or 9, wherein the flange (8) comprises a radial portion (8a) of annular shape,
and wherein the bypass valve (10) comprises:
- at least one axial abutment surface (S14) defined by the removable connection member (10c) and adapted to engage against the flange (8) from below in said locking configuration,
- a movable valve closure member (12), and
- a seating region (ZS) on which the valve closure member (12) engages in a closed state of the bypass valve (10), the seating region being axially oriented opposite to said axial abutment surface (S14).

11. Filter according to any one of the preceding claims, wherein the flange (8) includes the complementary securing means (8c) and constitutes a mounting flange for the bypass valve (10),
and wherein the housing (2) comprises:
- a bowl (B) in which is arranged the bottom portion (20) of the housing (2), and comprising a mounting bracket, the filter insert (4) comprising, opposite to the mounting flange (8), a positioning flange (9) cooperating with said mounting bracket to nest and position the cartridge (CA) coaxially on a central duct (21) of the mounting bracket; and
- said cover (3) which is adapted to be screwed onto the bowl (B) and which has at least one attachment member (34, 35) for the cartridge (CA), said attachment member (34, 35) comprising a portion for driving the cartridge (CA) in rotation, at least during an unscrewing of the cover (3) to which the cartridge (CA) is fixed.

12. Filter according to claim 11, wherein the positioning flange (9) is a single piece of plastic and includes plugging means (19) which extend around the central duct (21) that defines the outlet or is in communication with the outlet (2b).

13. Removable cartridge (CA) of the filter defined in any one of claims 1 to 12, intended for removing impurities in a liquid lubricant, the cartridge comprising a filter insert (4) and a bypass valve (10),
with knowledge that the filter insert (4), which extends longitudinally between a distal first end (4a) of the outlet and a proximal second end (4b) of the outlet, comprises:
- a filter medium (5) of annular shape which extends around a central axis (A) defining a longitudinal axis of the filter insert (4);
- a flange (8), located towards the first end (4a), for covering one axial end (50) of the filter medium (5);
the bypass valve (10) forming a preassembled unit and secured to the filter insert (4), the bypass valve being thus adapted to be integrally secured on the first end (4a), by a locking action which is carried out by pivoting the bypass valve (10) and the filter insert (4) relative to one another about the central axis (A),
the cartridge being provided with a plugging member (19) which is formed in the filter insert (4) and projects axially opposite from the bypass valve (10), the filter medium (5) of the filter insert (4) having a lower axial end covered by a radial portion (9a) of a lower flange (9) that is part of the filter insert (4), the plugging member (19) protruding axially downward relative to the radial portion (9a) of the lower flange (9) and provided with at least one annular sealing member (J3) in order to plug a drainage channel (20d) of the filter (1),
wherein the removable cartridge (CA) is defined by assembling said filter insert (4) which is disposable and said bypass valve (10) which is reusable,
the bypass valve (10) and the first end (4a) of the filter insert (4) being immobilized relative to one another by means of a bayonet-type connection in the locking configuration.
the bypass valve (10) having at least one removable connection member (10c) which:
- in a locking configuration, is formed higher than a sealing region defined by the annular radial contact of a sealing member between the flange (8) and the bypass valve (10), being axially engaged with the complementary securing means (8c) formed on the first end (4a) of the filter insert (4), the complementary securing means being formed on the flange (8) to which the bypass valve (10) is directly attached, and
- allows subsequent disassembly of the bypass valve (10) from the filter insert (4).

14. Removable cartridge according to claim 13, wherein the filter insert (4) has a mounting flange (8) for attachment to the bypass valve (10), a bayonet-type connection being made between said removable connection member (10c) that is part of the bypass valve and the complementary securing means (8c) that are part of the filter insert, the bypass valve (10) having:
- an insertable portion (15) that is inserted through a central hole of the mounting flange (8), allowing the valve closure member (12) to engage on a seating region (ZS) in an interior space (6) bordered by an inner face of the filter medium (5),
- said removable connection member (10c) being part of a complementary outer portion of the insertable portion (15), and extending substantially in a plane perpendicular to the central axis (A).

15. Removable cartridge according to claim 14, wherein the filter insert (4) further comprises a positioning flange (9) supporting two annular seals (J3, J4) arranged one on either side of a downwardly projecting annular protrusion formed in the positioning flange (9), wherein the annular protrusion and the two seals define the plugging member (19).
